# EUROPÄISCHE PATENTANMELDUNG

(11) **EP 1 094 163 A2**
(43) Veröffentlichungstag der Anmeldung: **25.04.2001**
(21) Anmeldenummer: 00122318.9
(22) Anmeldetag: 20.10.2000
(51) Int. Cl.: E03F 11/00, C02F 3/12

(54) **Mehrzweckschacht, Kleinkläranlage und Abwasserbehandlungsverfahren**

(30) Priorität: 22.10.1999 DE 19951194
(71) Anmelder: Bednarsch, Gerd, 98528 Suhl (DE)
(72) Erfinder: Bednarsch, Gerd, 98528 Suhl (DE)
(74) Vertreter: Engel, Christoph Klaus

(57) **Zusammenfassung**

Die Erfindung betrifft einen Mehrzweckschacht (1) aus Kunststoff zur Einleitung von Flüssigkeiten ggf. mit gelösten oder ungelösten Feststoffen, bestehend aus einem Schachtkörper (2), der einen sechseckigen Querschnitt mit einer Vielzahl von Profilierungen (4) besitzt, wobei der Querschnitt entlang der Längserstreckung des Schachtkörpers im wesentlichen unverändert ist; und einem Schachtkopf (3), der an seinem unteren Ende einstückig an den Schachtkörper (2) angeformt ist. Die Erfindung gibt weiterhin eine Kleinkläranlage (30) zur Behandlung von Abwässern an, bestehend aus mindestens zwei dieser Mehrzweckschächte, die miteinander in Verbindung stehen, wobei ein erster Mehrzweckschacht (31) als Vorklärbehälter dient und ein zweiter Mehrzweckschacht (32) als Bioreaktor dient. Außerdem nennt die Erfindung ein Abwasserbehandlungsverfahren zur bevorzugten Ausführung in einer derartigen Kleinkläranlage.

## Beschreibung

Die vorliegende Erfindung betrifft einen Mehrzweckschacht aus Kunststoff zur Einleitung von Flüssigkeiten, die ggf. gelöste oder ungelöste Feststoffe enthalten. Die Erfindung betrifft außerdem eine Kleinkläranlage zur Behandlung von Abwässern, die unter Verwendung von mindestens zwei Mehrzweckschächten aufgebaut ist. Weiterhin betrifft die Erfindung ein vollbiologisches Abwasserbehandlungsverfahren zur Ausführung in einer Kleinkläranlage.

Im Tiefbau besteht häufig der Bedarf, Behälter, Röhren, Schächte oder ähnliche Hohlräume im Erdreich auszubilden, um darin beispielsweise Flüssigkeiten zu leiten, zu sammeln oder einer Behandlung zu unterziehen. Außerdem werden Versorgungs-, Kontroll- und Zugangsschächte benötigt, die dauerhaft einen Hohlraum im Erdreich bereitstellen müssen und gegen Umwelteinflüsse weitgehend resistent sein sollen. Bislang werden zur Bereitstellung derartiger Hohlräume verschiedenste Bauformen und Materialien verwendet, beispielsweise Schächte aus Betonelementen oder Metallrohre. Häufig sind die verwendeten Bauelemente sehr schwer und können daher nur mit aufwendiger Bautechnik an ihrem Bestimmungsplatz eingebaut werden.

In jüngerer Zeit sind für kleinere Hohlräume auch Bauelemente aus Kunststoff eingesetzt worden, die jedoch häufig den Nachteil mangelnder Stabilität mit sich bringen. Prinzipiell werden für die verschiedensten Anwendungen aber unterschiedliche Bauformen eingesetzt, so daß eine Vielzahl von verschiedenen Bauelementen in den entsprechenden Unternehmen vorrätig gehalten werden müssen. Nicht zuletzt führt dies zu einer unerwünschten Kostensteigerung.

Es besteht daher der Bedarf, ein im Tiefbau einsetzbares Bauelement bereitzustellen, welches aufgrund seiner konstruktiven Gestaltung an unterschiedlichste Einsatzbedingungen leicht angepaßt werden kann und bei geringen Kosten die Anforderungen der jeweiligen Einsatzfälle erfüllt.

Diese und weitere Aufgaben werden durch einen Mehrzweckschacht erfüllt, der aus Kunststoff besteht und weiterhin die folgenden Bestandteile besitzt:
- einen Schachtkörper, der einen sechseckigen Querschnitt mit einer Vielzahl von zumindest teilweise umlaufenden Profilierungen besitzt, wobei der Querschnitt entlang der Längserstreckung des Schachtkörpers abgesehen von den Profilierungen im wesentlichen unverändert ist; und
- einen Schachtkopf, der an seinem unteren Ende einstückig an den Schachtkörper angeformt ist.

Dieser Mehrzweckschacht besitzt den Vorteil, daß er bei geringem Gewicht eine hohe Festigkeit aufweist, die u.a. durch die zumindest teilweise umlaufenden Profilierungen erzielt wird. Aufgrund der konstruktiven Gestaltung können Festigkeitswerte erzielt werden, die ein vergraben des Mehrzweckschachtes im Erdreich ohne weiteres ermöglichen.

Gemäß einer ersten Ausführungsform besitzt der Schachtkopf einen sechseckigen sich ausgehend vom Schachtkörper pyramidenstumpfartig verjüngenden Querschnitt und weist an mindestens einer (vorzugsweise an jeder) seiner sechs Seitenflächen einen Rohranschlußabschnitt (auch Rohranschlußspiegel genannt) auf, dessen Anschlußfläche im wesentlichen parallel zu der angrenzenden Seitenwand des Schachtkörpers verläuft. Durch die am Schachtkopf angeformten Rohranschlußabschnitte ist es möglich, an mehreren Seiten des Mehrzweckschachtes Zu- und Ableitungen vorzusehen, deren Anschluß schnell und mit einfachen Werkzeugen realisiert werden kann. Die einstückige Ausbildung zwischen Schachtkörper und Schachtkopf mit den angeformten Rohranschlußabschnitten vermeidet die Gefahr unerwünschter Leckstellen im Mehrzweckschacht. Die sechseckige äußere Form des Mehrzweckschachtes ermöglicht die (stehende bzw. vertikale) Anordnung mehrerer Mehrzweckschächte nebeneinander auf relativ kleinem Raum und in definierter Lage zueinander, beispielsweise in Wabenform.

Zur Erhöhung der Flexibilität ist es vorteilhaft, wenn der Schachtkopf an allen sechs Seitenflächen einen Rohranschlußabschnitt besitzt. Die Stabilität des Mehrzweckschachtes wird durch sich periodisch über die gesamte Fläche der Seitenwände des Schachtkörpers erstreckende Profilierungen erhöht, die beispielsweise als rechteckförmige Erhebungen und Vertiefungen ausgebildet sein können. Eine weitere Stabilitätserhöhung kann durch die Profilierung des Bodens des Schachtkörpers erreicht werden.

Bei einer abgewandelten Ausführungsform ist der Schachtkopf an einer Seitenwand des Schachtkörpers angeformt und die beiden Stirnseiten des Schachtkörpers sind durch zwei sphärisch gewölbte Abschlußelemente verschlossen, die ebenfalls einstückig an den Schachtkörper angeformt sind. Vorzugsweise sind an den Abschlußelementen wiederum Rohranschlußabschnitte angeformt, deren Anschlußfläche im wesentlichen parallel zu den Stirnseiten des Schachtkörpers verlaufen. Der damit ausgebildete Mehrzweckschacht wird zumeist liegend im Erdreich angeordnet.

Es ist außerdem zweckmäßig, wenn die Seitenflächen des Schachtkopfes an ihrem oberen Ende in einer Öffnung mit kreisförmigen Querschnitt auslaufen, wobei vorzugsweise an die kreisförmige Öffnung eine rohrförmige Turmverlängerung aufsteckbar oder anflanschbar ist. Diese Turmverlängerung wird in ihrer Längserstreckung so ausgelegt sein, daß sie sich bei einem im Erdreich eingegrabenen Mehrzweckschacht im wesentlichen bis an die Erdoberfläche erstreckt. Die Öffnung des Mehrzweckschachtes oder die obere Öffnung der Turmverlängerung wird durch einen Deckel verschlossen, wobei eine Maßabstimmung an herkömmliche oder speziell angepaßte Schachtdeckel sinnvoll ist.

Eine abgewandelte Ausführungsform des Mehrzweckschachtes zeichnet sich dadurch aus, daß im Schachtkörper eine Vielzahl von relativ kleinen Löchern vorgesehen sind, durch die eingebrachte Flüssigkeit verzögert in die Umgebung ablaufen kann. Ein derartiger Mehrzweckschacht kann vorteilhaft als Versickerungsreservoir verwendet werden, in welches beispielsweise das Regenwasser aus einer Dachentwässerung eingeleitet wird, um dieses anschließend verzögert in das Erdreich abzugeben.

Mit dem erfindungsgemäßen Mehrzweckschacht läßt sich in vorteilhafter Weise beispielsweise auch eine Kleinkläranlage zur Behandlung von Abwässern aufbauen, die aus mindestens zwei Mehrzweckschächten besteht, wobei ein erster Mehrzweckschacht als Vorklärbehälter und Schlammsilo dient und ein zweiter Mehrzweckschacht als Bioreaktor dient, und wobei eine Zulaufleitung für die Zufuhr vorgeklärter Abwässer vom Vorklärbehälter zum Bioreaktor und eine Rücklaufschlammleitung für die Rückführung von Klärschlamm aus dem Bioreaktor in den Vorklärbehälter vorhanden sind.

Eine derartige Kleinkläranlage läßt sich mit baulich geringem Aufwand auch in relativ schwer zugänglichen Geländebereichen installieren. Sie ermöglicht die ausreichende Säuberung von Haushaltsabwässern, wenn ein direkter Anschluß der entsprechenden Wohnanlage an eine öffentliche Kläranlage nicht möglich oder nicht vorgesehen ist. Beim Betrieb derartiger Anlagen sind die jeweils gültigen rechtlichen Bestimmungen (bspw. Abwasserverordnungen) zu beachten, wobei durch die erfindungsgemäße Anlage übliche Anforderungen erfüllt werden.

Bei einer abgewandelten Ausführungsform ist ein dritter Mehrzweckschacht vorgesehen, in dem vorzugsweise eine Steuereinheit und weitere Hilfselemente, wie beispielsweise ein Gebläse zur Bereitstellung von Druckluft, für die Kleinkläranlage geschützt untergebracht werden können. Die entsprechenden Mehrzweckschächte können im vormontierten Zustand zum Einsatzort geliefert werden, so daß die Kleinkläranlage innerhalb kürzester Zeit errichtet werden kann.

Es ist besonders zweckmäßig, wenn die Zulaufleitung und die Rücklaufschlammleitung sowie ggf. weitere Zu- und Ableitungen durch die Anschlußflächen des Schachtkopfes des jeweiligen Mehrzweckschachtes geführt sind. Bei einer bevorzugten Ausführungsform ist im Bioreaktor eine Belüftungseinrichtung mit einer Druckluftzuführung angeordnet, über die Luft in den unteren Bereich des Bioreaktors eingeleitet wird. Außerdem ist im Bioreaktor eine Rücklaufschlammpumpe vorgesehen, die aus dem unteren Bereich des Bioreaktors dort abgesetzten Klärschlamm absaugt und über die Rücklaufschlammleitung in den Vorklärbehälter zurückführt. Der Bioreaktor besitzt zweckmäßigerweise weiterhin eine Klarwasserpumpe, die in der Nähe der Abwasseroberfläche das geklärte Abwasser abpumpt und bei entsprechender Qualität in ein Kanalsystem oder ein Oberflächengewässer abgibt oder in einen nachgeschalteten Mehrzweckschacht zur Versickerung einspeist.

Vorzugsweise in der erfindungsgemäßen Kleinkläranlage kann ein Abwasserbehandlungsverfahren zur Ausführung in einer Kleinkläranlage durchgeführt werden, wobei die nachfolgenden Schritte zyklisch ablaufen:
- Einleitung des Abwassers in einen ersten Behälter, wobei sich im Abwasser enthaltene feste Bestandteile als Primärschlamm am Boden absetzen;
- Zufuhr des vorgeklärten Abwassers in einen zweiten Behälter;
- Durchführung einer Stoffwechselphase, in der die Belüftung des im zweiten Behälters enthaltenen Abwassers durch Zufuhr von Luft bzw. Sauerstoff erfolgt, um Stoffwechselvorgänge von vorhandenen Mikroorganismen zur biologischen Behandlung des Abwassers zu begünstigen;
- Durchführung einer Ruhephase im zweiten Behälter, in welcher keine Belüftung und im wesentlichen keine Zufuhr weiteren Abwassers aus dem ersten Behälter erfolgt, wobei sich Stoffwechselprodukte und ggf. weitere feste Bestandteile als Sekundärschlamm am Boden absetzen;
- Abpumpen des Klarwassers und bei Bedarf von Teilen des Sekundärschlamms aus dem zweiten Behälter vor der Zufuhr von größeren Mengen neuen Abwassers.

Durch dieses Verfahren ist es möglich, normale Abwässer vollbiologisch in lediglich zwei kleineren Behältern und ohne größeren Steuerungs- und Überwachungsaufwand zu behandeln, wobei Reinigungsergebnisse erzielt werden, die den gesetzlichen Anforderungen genügen und bislang nur von wesentlich größeren und aufwendigeren Anlagen bereitgestellt werden können.

Die Zeiten, in denen die einzelnen Phasen des Abwasserbehandlungsverfahrens ablaufen, sind speziell auf die angeschlossenen Wohneinheiten abgestimmt. Bei einer vorteilhaften Ausgestaltung läuft die Stoffwechselphase im wesentlichen am Tag und die Ruhephase im wesentlichen in der Nacht ab, da nachts nicht mit dem Anfall größerer Abwassermengen gerechnet werden muß.

Weitere Vorteile, Einzelheiten und Weiterbildungen ergeben sich aus der nachfolgenden Beschreibung bevorzugter Ausführungsformen, unter Bezugnahme auf die Zeichnung. Es zeigen:
- Fig. 1: eine Seitenansicht einer ersten Ausführungsform eines erfindungsgemäßen Mehrzweckschachtes zur vertikalen Anordnung im Erdreich;
- Fig. 2: eine Ansicht von oben des Mehrzweckschachtes aus Fig. 1;
- Fig. 3: ein Stoßbeschickungssystem mit einem Mehrzweckschacht in einer prinzipiellen Ansicht von oben;
- Fig. 4: das Stoßbeschickungssystem aus Fig. 3 in einer teilweise geschnittenen Seitenansicht;
- Fig. 5: eine prinzipielle Schnittdarstellung eines zur Muldenversickerung verwendeten Mehrzweckschachtes;
- Fig. 6: eine prinzipielle Schnittdarstellung eines zur Schachtversickerung verwendeten Mehrzweckschachtes;
- Fig. 7: eine Seitenansicht einer abgewandelten Ausführungsform des Mehrzweckschachtes zur horizontalen Anordnung im Erdreich;
- Fig. 8: eine perspektivische Teilansicht einer weiteren Ausführungsform des Mehrzweckschachtes zur horizontalen Anordnung im Erdreich;
- Fig. 9: eine auf zwei Mehrzweckschächten bestehende Kleinkläranlage in einer teilweise geschnittenen Seitenansicht;
- Fig. 10: die Kleinkläranlage aus Fig. 7 in einer vereinfachten Schnittansicht von oben;
- Fig. 11: eine Prinzipdarstellung der in der Kleinkläranlage ablaufenden Verfahrensschritte.

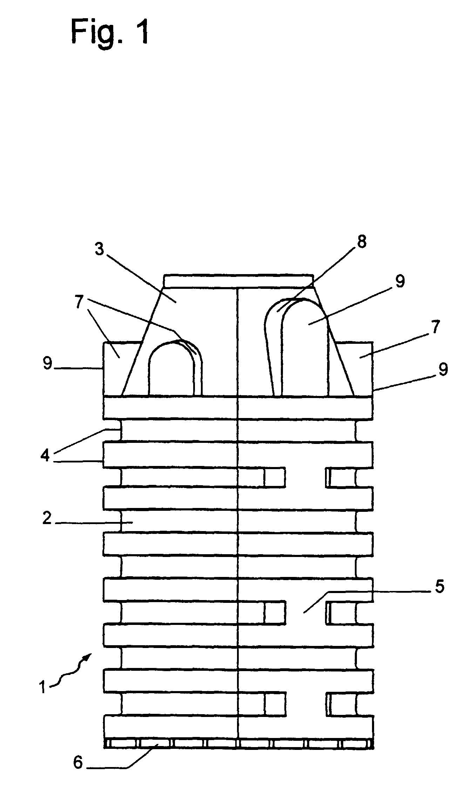

Fig. 1 zeigt in einer seitlichen Ansicht einen Mehrzweckschacht 1, der aus einem Schachtkörper 2 und einem Schachtkopf 3 besteht. Dieser Mehrzweckschacht kann vorzugsweise vertikal im Erdreich eingelassen werden. Der Schachtkörper 2 besitzt eine Vielzahl von Profilierungen 4, die im gezeigten Ausführungsbeispiel eine rechteckige Querschnittsform aufweisen. Die Profilierungen 4 erstrecken sich im wesentlichen über die gesamten Seitenflächen des Schachtkörpers. Einige der Profilierungen 4 sind umlaufend ausgebildet, jedoch sind an einzelnen Stellen des Schachtkörpers die Profilierungen unterbrochen, um zusätzliche Anschlußbereiche 5 auszubilden, die im Bedarfsfall für den einfachen Anschluß von Rohrleitungen oder dergleichen verwendet werden können. Der Schachtkörper 2 besitzt auch eine Bodenfläche 6, die vorzugsweise ebenfalls eine Profilierung zur Erhöhung der Stabilität aufweist.

An der Innenseite der Bodenfläche können Montageebenen und/oder spezielle Montageelemente (nicht gezeigt) vorgesehen sein, die beispielsweise eine einfache Befestigung von Pumpen o.ä. ermöglichen.

Am oberen Ende gehen die Seitenwände des Schachtkörpers 2 unmittelbar in die Seitenflächen des Schachtkopfes 3 über. Der Schachtkopf 3 weist einen sechseckigen, sich kegelstumpfartig nach oben verjüngenden Querschnitt auf, wobei die Seitenflächen vorzugsweise die gleiche Neigung besitzen. An den Seitenflächen sind Rohranschlußabschnitte 7 und 8 angeordnet, deren vordere Anschlußflächen 9 im wesentlichen parallel zu der angrenzenden Seitenwand des Schachtkörpers verlaufen. Die Rohranschlußabschnitte 7 und 8 unterscheiden sich hinsichtlich ihrer Größe, wodurch die an die Anschlußflächen 9 angeschlossenen Rohre (oder andere Verbindungselemente) je nach gewähltem Rohranschlußabschnitt in unterschiedlicher Höhe befestigt sein können. Als Rohre kommen für den Anschluß insbesondere herkömmliche Abwasserrohre und die zugehörigen Muffen und Reduzierelemente aus verschiedenen Kunststoffen zum Einsatz, die in verschiedenen Standardmaßen zur Verfügung stehen (z.B. DN 70, DN 100, DN 150).

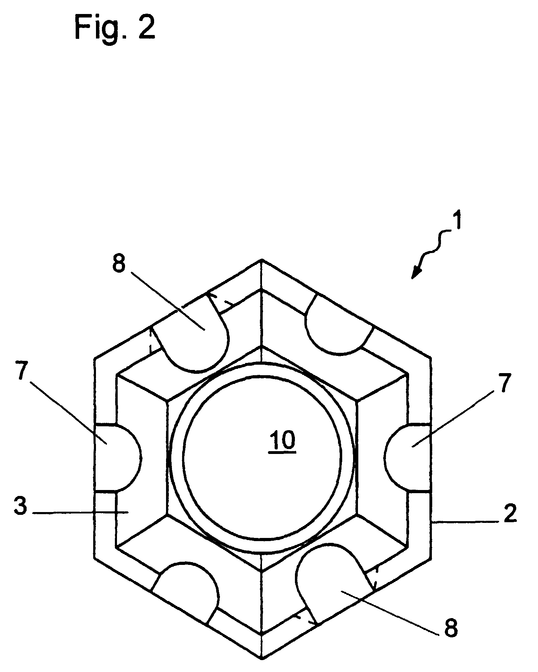

Aus der in Fig. 2 gezeigten Draufsicht des Mehrzweckschachtes 1 ist erkennbar, daß der Schachtkörper 2 und der Schachtkopf 3 jeweils einen sechseckigen Querschnitt aufweisen. Die Seitenflächen des Schachtkopfes 3 münden an ihrem oberen Ende in einer Öffnung 10, die einen kreisförmigen Querschnitt besitzt. Durch den sechseckigen Querschnitt des Mehrzweckschachtes ist beispielsweise eine wabenförmige Aneinanderreihung mehrerer gleichartiger Mehrzweckschächte möglich. Die Öffnung 10 kann durch einen passenden Deckel verschlossen werden. Es ist aber auch möglich, weitere angepaßte Bauelemente an die Öffnung 10 anzuschließen, wie dies weiter unten bei einer anderen Ausführungsform noch detailliert erläutert wird.

Der Mehrzweckschacht ist vorzugsweise mit den dargelegten Elementen einstückig ausgebildet und besteht aus Kunststoff, beispielsweise rotations-gesintertem Polyäthylen.

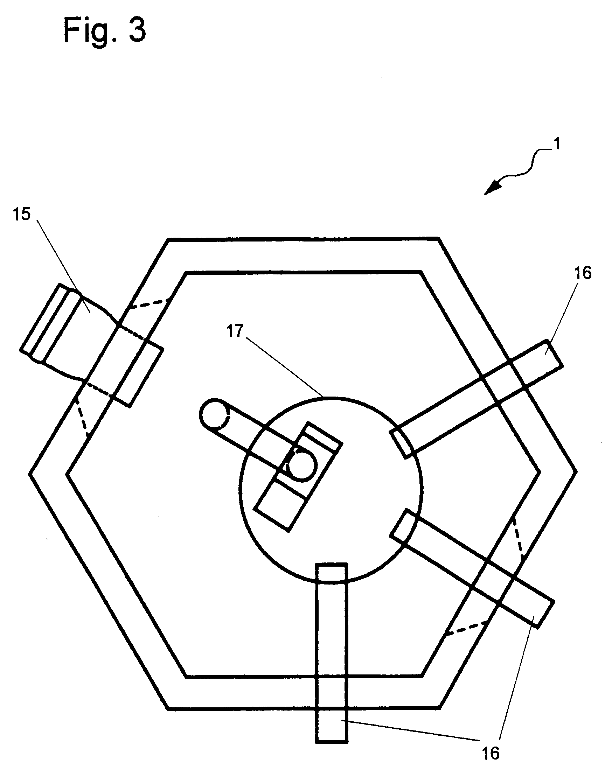

Fig. 3 zeigt ein Anwendungsbeispiel eines derartigen Mehrzweckschachtes in einer vereinfachte Schnittansicht von oben. Bei dieser Ausführungsform wird der Mehrzweckschacht als Stoßbeschickungssystem mit einer Dreier-Verteilung eingesetzt. Flüssigkeiten, die diskontinuierlich und mit variabler Zulaufmenge pro Zeiteinheit aufzufangen und bei definierter Anstauhöhe im Behälter schwallartig den nachfolgenden Versickerungsleitungen zuzuführen sind, werden über einen Zulauf 15 in den Mehrzweckschacht 1 eingebracht. Der Zulauf 15 ist beispielsweise als Standard-Abwasserrohr mit einem Durchmesser vom 150 mm ausgelegt, während drei ebenfalls am Mehrzweckschacht 1 angeordnete Ablaufstutzen 16 nur einen Durchmesser von beispielsweise 70 mm aufweisen. Im Mehrzweckschacht ist weiterhin ein Verteilerelement 17 angeordnet.

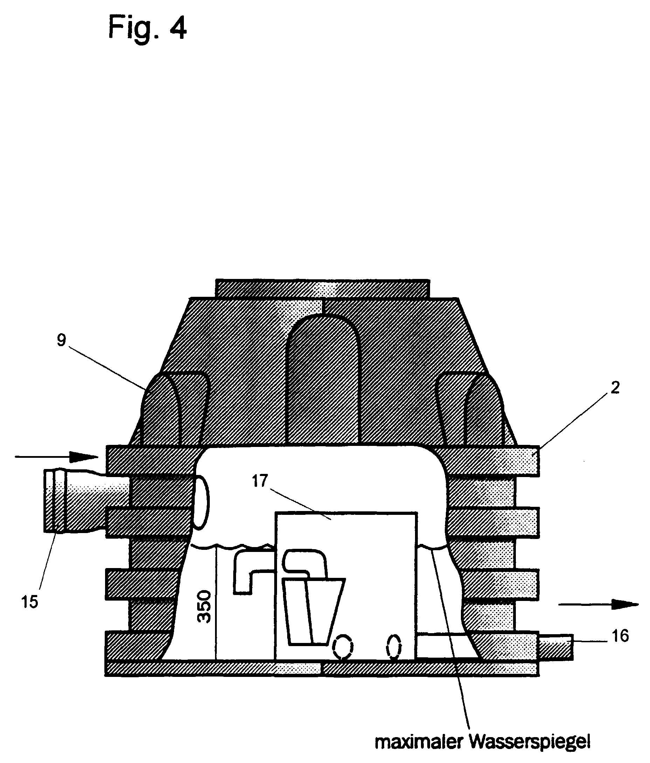

Fig. 4 zeigt in einer teilweise geschnittenen Seitenansicht den in Fig. 3 dargestellten Mehrzweckschacht zur Verwendung als Stoßbeschickungssystem. Es ist ersichtlich, daß sowohl der Zulauf 15 als auch die Ablaufstutzen 16 direkt in den Seitenwänden des Schachtkörpers 2 angeordnet sind. Bei anderen Ausführungsformen könnte zumindest der Zulauf 15 durch eine Anschlußfläche 9 im Schachtkopf geführt werden. Dies ist insbesondere von den jeweiligen baulichen Umgebungsbedingungen (Gefälle, Einfüllhöhe) abhängig.

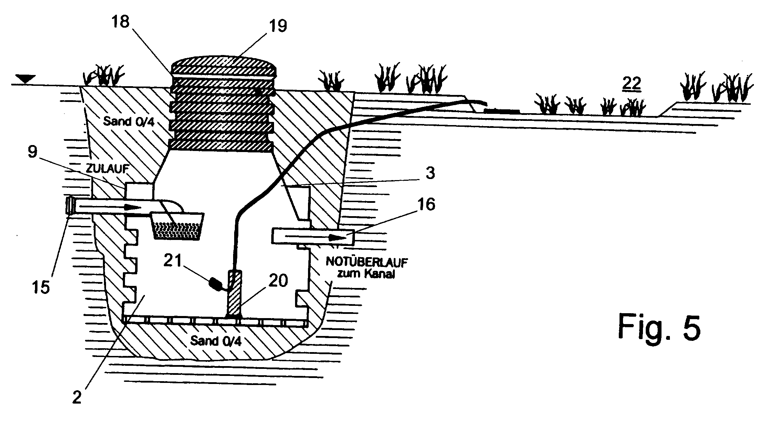

Fig. 5 zeigte eine teilweise geschnittene Prinzipdarstellung eines im Erdreich eingegrabenen Mehrzweckschachtes, der bei dieser Ausführungsform für ein Muldenversickerungssystem verwendet wird. In diesem Fall durchstößt der Zulauf 15 die Anschlußfläche 9 eines Rohranschlußabschnittes im Schachtkopf 3. Als Notüberlauf ist in einer Seitenwand des Schachtkörpers 2 wiederum ein Ablaufstutzen 16 angeordnet. An die Öffnung 10 des Schachtkopfes 3 ist bei der dargestellten Ausführungsform eine Turmverlängerung 18 aufgesetzt, die durch einen Deckel 19 oben verschlossen ist. Die Turmverlängerung 18 ermöglicht einen tieferen Einbau des Mehrzweckschachtes unterhalb der Erdoberfläche, so daß die Leitungen ohne zusätzliche Isolierung frostgeschützt im Erdreich liegen. Innerhalb des Mehrzweckschachtes ist eine Pumpe 20 angeordnet, die über einen Schwimmerschalter 21 steuerbar ist. Das über den Zulauf 15 in den Mehrzweckschacht eingebrachte Abwasser wird zeitlich gestreckt durch die Pumpe 20 in eine Sickermulde 22 befördert, wo es auf natürliche Weise in der Bodenschicht versickern kann.

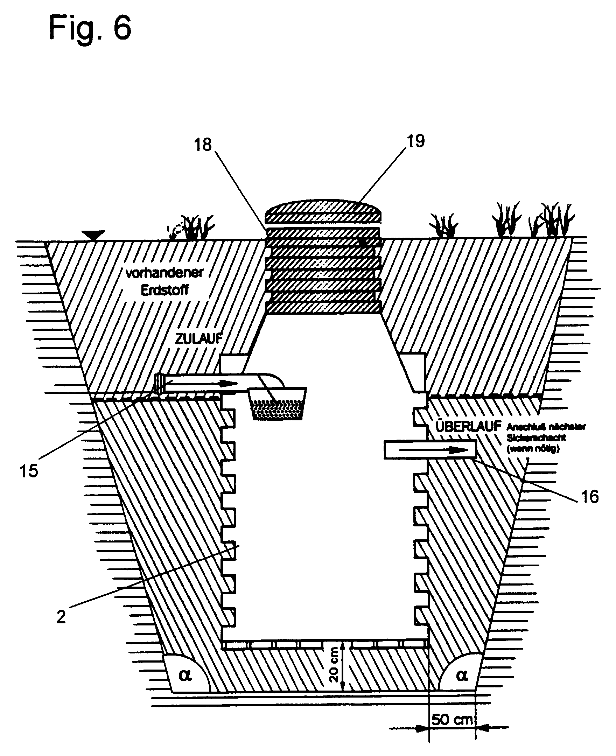

Eine abgewandelte Ausführungsform des Mehrzweckschachtes ist in Fig. 6 in einer vereinfachten Schnittansicht dargestellt. Der Mehrzweckschacht, der hier mit einem relativ großen Volumen ausgelegt ist, besitzt wieder einen Zulauf 15 und einen Notüberlauf 16. Bei abgewandelten Ausführungsformen kann der Überlauf 16 in einen nachfolgenden weiteren Mehrzweckschacht münden, wodurch beispielsweise eine Kaskade aus mehreren Mehrzweckschächten aufgebaut werden kann. Die Besonderheit des hier verwendeten Mehrzweckschachtes besteht darin, daß in den Seitenwänden und in der Bodenfläche des Schachtkörpers 2 eine Vielzahl von Löchern bzw. Schlitzen (nicht gezeigt) vorgesehen sind, durch die die eingebrachte Flüssigkeit (in der Regel Regenwasser) verzögert in die Umgebung ablaufen kann. Eine Pumpe ist bei dieser Ausführungsform nicht erforderlich.

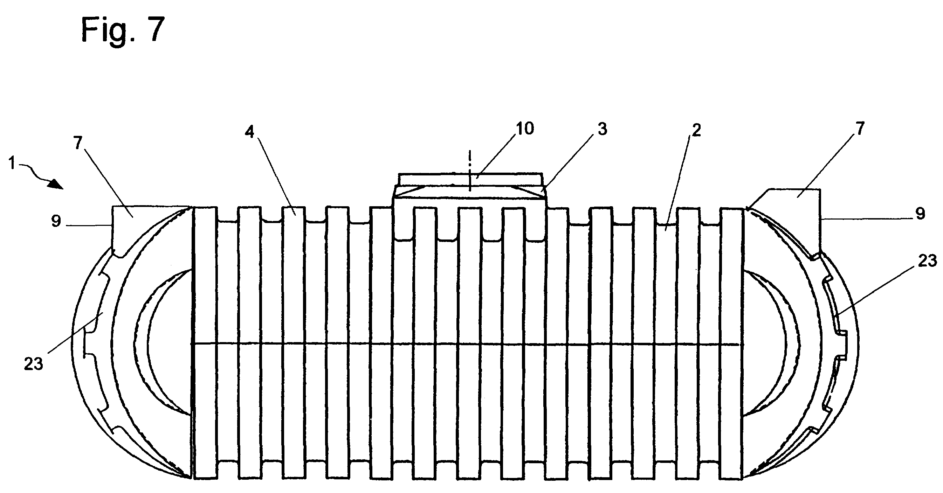

In Fig. 7 ist eine abgewandelte Ausführungsform des Mehrzweckschachtes 1 in einer Seitenansicht gezeigt. Von den zuvor erläuterten Bauformen unterscheidet sich diese Variante vor allem durch die Anordnung des Schachtkopfes 3 an einer Seitenwand des Schachtkörpers 2, der wiederum mit einer Vielzahl von Profilierungen 4 ausgestattet ist und einen sechseckigen Querschnitt besitzt. Dieser Mehrzweckschacht ist aufgrund der Anordnung des Schachtkopfes für den horizontalen Einbau im Erdreich prädestiniert. An die beiden gegenüberliegenden Stirnseiten des Schachtkörpers ist jeweils ein sphärisch gewölbtes Abschlußelement 23 angeformt. Das Abschlußelement 23 besitzt in seinem oberen Bereich wiederum den Rohranschlußabschnitt 7 mit der Anschlußfläche 9, die hier parallel zur Stirnseite des Schachtkörpers verläuft.

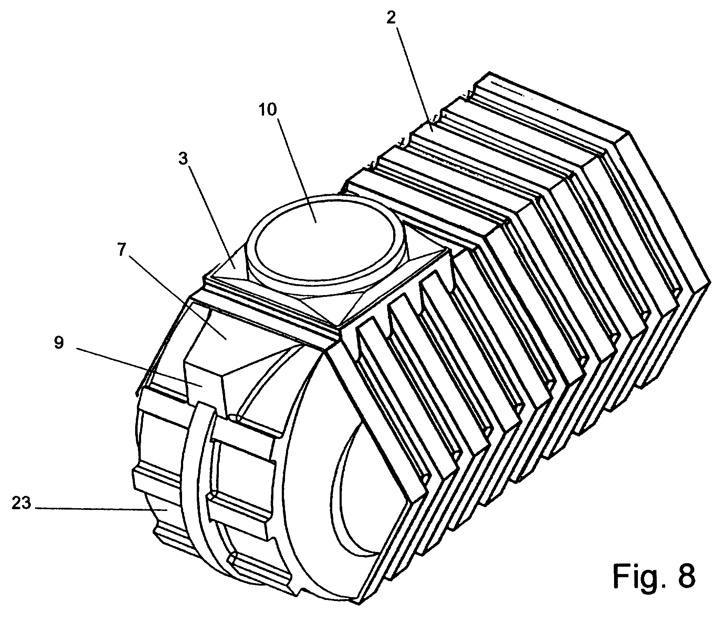

Aus der in Fig. 8 gezeigten perspektivischen Teilansicht des Mehrzweckschachtes läßt sich der sechseckige Querschnitt des Schachtkörpers 2 und die Gestaltung der Übergangsbereiche zu den Abschlußelementen 23 erkennen. Außerdem wird deutlich, daß der Schachtkopf 3 an beliebiger Stelle an der Seitenwand des Schachtkörpers angeformt sein kann. So lassen sich auch verschieden große Mehrzweckschächte mit ähnlichen Bauformen erzeugen. Insbesondere können die für die Herstellung notwendigen Formen modular aufgebaut und dadurch mehrfach verwendbar sein. Die in den Fig. 7 und 8 gezeigten Ausführungsformen eignen sich besonders zum Aufbau von Mehrzweckschächten mit großem Innenvolumen, die beispielsweise als geschlossene Sammelgruben für Fäkalien eingesetzt werden. Die spezielle Gestaltung des Schachtkörpers ermöglicht wiederum die Bereitstellung der geforderten Festigkeitswerte.

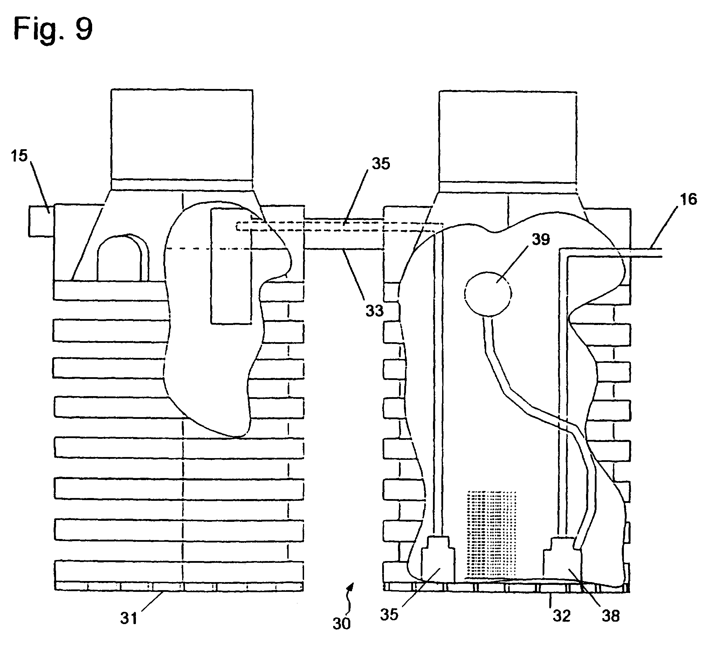

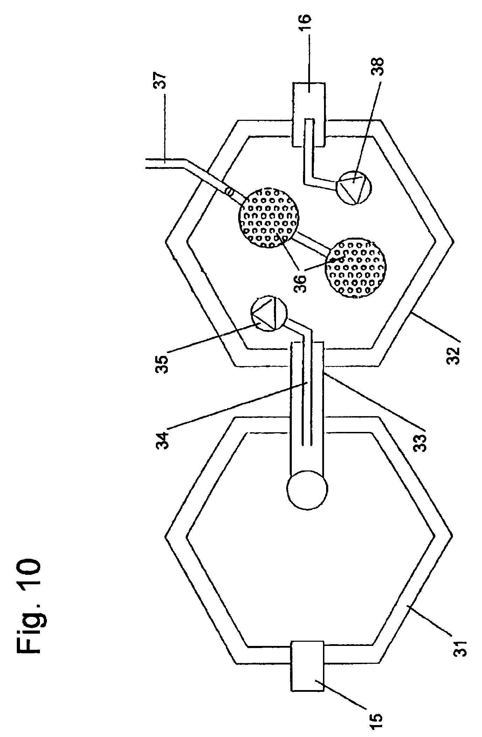

Fig. 9 zeigt in einer teilweise geschnittenen Seitenansicht eine Kleinkläranlage 30, die aus zwei miteinander gekoppelten Mehrzweckschächten besteht. In Fig. 10 ist die Kleinkläranlage 30 in einer geschnittenen Ansicht von oben dargestellt. Im Gegensatz zum herkömmlichen Belebungsverfahren in bekannten Kläranlagen, bei dem die einzelnen Schritte zur Reinigung des Abwassers nacheinander und in verschiedenen Kammern bzw. Behältern und Becken ablaufen, wird bei der erfindungsgemäßen Kleinkläranlage die vollständige Reinigung in nur zwei Behältern möglich. Die biologische Reinigung wird in einem sogenannten Bioreaktor oder auch SBR (Sequencing Batch Reaktor) in einer Folge von Zyklen erreicht. Der dabei ablaufende diskontinuierliche Prozeß kann in vier Hauptphasen eingeteilt werden:
1. **Füllphase**
   Zulauf der täglichen Abwassermenge
2. **Behandlungsphase**
   Belüften und Mischen des Reaktorinhalts
3. **Absetzphase**
   Absetzen des Bioschlamms und
   Ausbildung einer Klarwasserzone
4. **Leerungsphase**
   Klarwasserabzug und Überschußschlammabzug

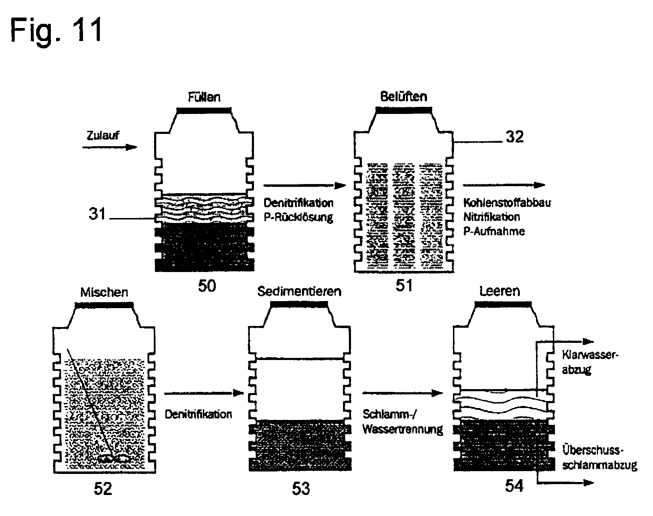

Ein erster Mehrzweckschacht 31 dient als Vorklärbehälter und Primär-/Sekundärschlammspeicher. Über den Zulauf 15 gelangt haushaltsübliches Abwasser in den Vorklärbehälter 31, wo es bis zum Erreichen eines Überlaufpegels zwischengespeichert wird. Der Ablauf des eigentlichen Klärvorgangs wird unten in Bezug auf Fig. 11 detaillierter beschrieben. Der Vorklärbehälter 31 ist mit einem zweiten Mehrzweckschacht verbunden, welcher als Bioreaktor 32 dient. Die Verbindung zwischen Vorklärbehälter 31 und Bioreaktor 32 wird einerseits durch eine Zulaufleitung 33 hergestellt, über welche die Zufuhr vorgeklärter Abwässer vom Vorklärbehälter 31 zum Bioreaktor 32 erfolgt. Andererseits besteht eine in ihrer Wirkungsrichtung entgegensetzte Verbindung durch eine Rücklaufschlammleitung 34, über welche Sekundärschlamm aus dem Bioreaktor in den Vorklärbehälter zurückgeführt wird. Im Bioreaktor 32 ist eine Rücklaufschlammpumpe 35 angeordnet, die das Rückpumpen von Klärschlamm ausführt. Außerdem besitzt der Bioreaktor eine Belüftungseinrichtung 36, die beispielsweise durch mehrere Tellerbelüfter oder Schlauchbelüfter gebildet wird. Die Belüftungseinrichtung 36 wird von einer Druckluftzuführung 37 versorgt, welche an ein geeignetes Gebläse oder einen Kompressor (nicht gezeigt) angeschlossen ist. Schließlich befindet sich im Bioreaktor 32 eine Klarwasserpumpe 38 mit einem nahe der Abwasseroberfläche schwimmenden Entnahmepunkt 39. Die Klarwasserpumpe 38 saugt unterhalb der Abwasseroberfläche im Bioreaktor das geklärte Wasser ab und pumpt dieses aus dem Bioreaktor über den Ablauf 16 heraus. Die Rücklaufschlammpumpe und die Klarwasserpumpe können bei abgewandelten Ausführungsformen auch außerhalb des Bioreaktors angeordnet sein, wenn entsprechende Leitungen in den Bioreaktor geführt sind. Die Pumpen und die Belüftungseinrichtung des Bioreaktors werden von einer Steuereinheit (nicht gezeigt) gesteuert, wobei diese Steuereinheit und das Gebläse bzw. der Kompressor in einem festen Bauwerk oder bei einer abgewandelten Ausführungsform in einem dritten Mehrzweckschacht angeordnet werden können.

Bei abgewandelten Ausführungsformen der Kleinkläranlage können auch weitere Mehrzweckschächte angeordnet werden, um mehrere Klärstufen in diesen Mehrzweckschächten durchzuführen oder um das wirksame Volumen und damit die mögliche Anschlußgröße (Abwassermenge) zu erhöhen.

Fig. 11 zeigt in einem vereinfachten Ablaufplan die wesentlichen Verfahrensschritte, die in einer Kleinkläranlage mit zumindest zwei Mehrzweckschächten ausgeführt werden, um haushaltsübliches Abwasser zu klären und dabei so weit zu reinigen, daß eine Versickerung des geklärten Wassers im angrenzenden Bodenbereich ohne Umweltschädigungen möglich ist.

Das Abwasser, welches beispielsweise in einer bestimmten Wohneinheit erzeugt wird, gelangt in einem ersten Schritt 50 in den Vorklärbehälter 31, in welchem sich die enthaltenen Feststoffe am Boden absetzen und das verbleibende Abwasser mit ggf. enthaltenen Schwebstoffen im oberen Bereich des Mehrzweckschachtes angesammelt wird. Im einfachsten Fall erfolgt die Weiterleitung des vorgeklärten Abwassers in den Bioreaktor 32 durch eine Überlaufverbindung. Die häuslichen Abwässer können der Vorklärung auch über eine Hebeanlage zugeführt werden. Entscheidend ist dabei die richtige Steuerung des Pumpenspieles, um in den nachfolgenden Klärstufen die unten beschriebenen Bedingungen aufrecht zu erhalten. Vorzugsweise wird die Größe des Vorklärbehälters jedoch auf die durchschnittliche tägliche Abwassermenge eingestellt, die in den meisten Anwendungsfällen relativ konstant ist (durchschnittlicher Abwasseranfall gemäß Abwassererhebungen: 70 - 90 Liter pro Einwohner und Tag).

Im Schritt 51 wird das im Bioreaktor 32 enthaltene Abwasser durch die Belüftungseinrichtung einer Belüftung zum gezielten Sauerstoffeintrag unterzogen. Die Belüftung erfolgt vorzugsweise intermittierend. Durch die Belüftung erfolgt bereits eine Durchmischung des Reaktorinhaltes. Bei Bedarf kann in einem separaten Schritt 52 eine zusätzliche mechanische Durchmischung des Reaktorinhaltes erfolgen. Während der Belüftungs- und Durchmischungsphasen laufen die bekannten Klärvorgänge ab, die zu einem Kohlenstoffabbau und zur Nitrifikation führen. Insbesondere durch die Zufuhr von ausreichend Sauerstoff kann der Klärprozeß so stark optimiert werden, daß innerhalb weniger Stunden eine deutliche Verbesserung der Qualität des Abwassers möglich wird. Anschließend wird die Belüftung und die Durchmischung gestoppt, so daß in Schritt 53 eine Absetzphase einsetzt. Die Kleinkläranlage wird vorzugsweise so gesteuert, daß diese Absetzphase bzw. Ruhephase in den Nachtstunden stattfindet. In üblichen Haushalten wird etwa in der Zeit von 01.00 bis 04.00 Uhr kein oder sehr wenig Abwasser erzeugt, wodurch die Ruhephase nicht durch die Zufuhr neuen Wassers gestört wird. Ein angenehmer Nebeneffekt dieser Betriebsweise ist außerdem die Vermeidung störender Geräusche in der Nachtzeit, was insbesondere von Bedeutung ist, wenn die Kleinkläranlage in unmittelbarer Nähe von Wohn- und Schlafräumen aufgestellt ist.

Bereits nach relativ kurzer Zeit (eine Stunde genügt im Regelfall) wird sich in der Ruhephase im unteren Bereich des Bioreaktors 32 eine Restschlammschicht (Sekundärschlamm) absetzen, während im oberen Bereich das geklärte Abwasser (Klarwasser) zur Verfügung steht. Nun setzt im Schritt 54 die Entleerung des Bioreaktors ein, indem das Klarwasser abgepumpt wird. Unmittelbar daran abschließend kann bei Bedarf der Restschlamm aus dem Bioreaktor ebenfalls abgepumpt werden. Das Klarwasser kann einem nachfolgenden Mehrzweckschacht zur gezielten Versickerung zugeführt werden, in einen bezeichneten Vorfluter (Bach, Blumengraben, Fluß) oder in einen vorhandenen Kanal des Entsorgungspflichtigen eingeleitet werden. Der Restschlamm (Sekundärüberschußschlamm) wird vorzugsweise in den Vorklärbehälter 31 zurück gepumpt, so daß ein optimaler Schlammindex im Bioreaktor eingestellt wird. Durch die Vermischung des Sekundärschlamms mit dem Primärschlamm im Vorklärbehälter kommt es dort zu einer erwünschten Eindickung des Primärschlamms und zu einer anaeroben Stabilisierung des Schlammes. Der Sekundärschlamm wird üblicherweise nicht täglich sondern beispielsweise einmal in der Woche in den Vorklärbehälter zurück gepumpt. Die optimalen Zeitabstände zwischen den einzelnen Rückpumpvorgängen sind von der Qualität des Abwassers, der Menge und Zusammensetzung des täglich zugeführten Abwassers abhängig.

Bei abgewandelten Ausführungsformen kann die Steuerung der Kleinkläranlage auch Sonderbetriebsprogramme bereitstellen, wobei beispielsweise in Ferienzeiten, in denen über mehrere Tage kein neues Abwasser zugeführt wird, das Abpumpen des Klarwassers unterbleibt und statt dessen z.B. täglich ein Umwälzvorgang in der Kleinkläranlage durchgeführt wird, um die für die erwünschten Mikroorganismen notwendigen Umweltbedingungen innerhalb des Bioreaktors aufrechtzuerhalten. Ein weiteres Sonderprogramm kann vorgesehen sein, um den zeitlichen Ablauf der einzelnen Klärphasen zu verschieben, beispielsweise wenn bei Festlichkeiten noch am späten Abend oder in der Nacht größere Abwassermengen zu erwarten sind.

Zweckmäßigerweise ist die Kleinkläranlage mit einem Notüberlauf ausgestattet, der im Havariefall oder bei übermäßigem Abwasseranfall eine vorzeitige Ableitung des Abwassers ermöglicht.

## Patentansprüche

1. Mehrzweckschacht (1) aus Kunststoff zur Einleitung von Flüssigkeiten ggf. mit gelösten oder ungelösten Feststoffen, bestehend aus:
• einem Schachtkörper (2), der einen sechseckigen Querschnitt mit einer Vielzahl von zumindest teilweise umlaufenden Profilierungen (4) besitzt, wobei der Querschnitt entlang der Längserstreckung des Schachtkörpers abgesehen von den Profilierungen im wesentlichen unverändert ist; und
• einem Schachtkopf (3), der an seinem unteren Ende einstückig an den Schachtkörper (2) angeformt ist.

2. Mehrzweckschacht nach Anspruch 1, wobei der Schachtkopf:
• in Längsrichtung an der oberen Stirnseite des Schachtkörpers angeformt ist;
• einen sechseckigen sich ausgehend vom Schachtkörper (2) pyramidenstumpfartig verjüngenden Querschnitt besitzt; und
• an mindestens einer seiner sechs Seitenflächen einen Rohranschlußabschnitt (7, 8) aufweist, dessen Anschlußfläche (9) im wesentlichen parallel zu der angrenzenden Seitenwand des Schachtkörpers (2) verläuft.

3. Mehrzweckschacht nach Anspruch 1 oder 2, dadurch gekennzeichnet, daß jede der sechs Seitenflächen des Schachtkopfes (3) einen Rohranschlußabschnitt (7, 8) besitzt.

4. Mehrzweckschacht nach Anspruch 1, wobei der Schachtkopf (3) an einer Seitenwand des Schachtkörpers (2) angeformt ist, und wobei die beiden Stirnseiten des Schachtkörpers durch zwei sphärisch gewölbte Abschlußelemente (23) verschlossen sind, die ebenfalls einstückig an den Schachtkörper angeformt sind.

5. Mehrzweckschacht nach Anspruch 4, dadurch gekennzeichnet, daß an mindestens einem der Abschlußelemente (23) ein Rohranschlußabschnitt (7) angeformt ist, dessen Anschlußfläche (9) im wesentlichen parallel zu den Stirnseiten des Schachtkörpers (2) verläuft.

6. Mehrzweckschacht nach einem der Ansprüche 1 bis 5, dadurch gekennzeichnet, daß die Profilierungen (4) durch reckteckförmige Erhebungen und Vertiefungen gebildet sind, die sich periodisch über die gesamte Fläche der Seitenwände des Schachtkörpers (2) erstrecken.

7. Mehrzweckschacht nach einem der Ansprüche 1 bis 6, dadurch gekennzeichnet, daß der Schachtkopf (3) an seinem oberen Ende in einer Öffnung (10) mit kreisförmigem Querschnitt ausläuft, an welcher eine rohrförmige Turmverlängerung (18) anflanschbar ist, die sich bei im Erdreich eingegrabenem Mehrzweckschacht zumindest bis zur Erdoberfläche erstreckt und an ihrem oberen Ende durch einen Deckel (19) verschließbar ist.

8. Mehrzweckschacht nach einem der Ansprüche 1 bis 7, dadurch gekennzeichnet, daß im Schachtkörper (2) eine Vielzahl von Löchern vorgesehen sind, durch die eingebrachte Flüssigkeit verzögert in die Umgebung ablaufen kann.

9. Kleinkläranlage (30) zur Behandlung von Abwässern, bestehend aus mindestens zwei Mehrzweckschächten nach einem der Ansprüche 1 bis 8, die miteinander in Verbindung stehen, wobei ein erster Mehrzweckschacht (31) als Vorklärbehälter dient und ein zweiter Mehrzweckschacht (32) als Bioreaktor dient, und wobei eine Zulaufleitung (33) für die Zufuhr vorgeklärter Abwässer vom Vorklärbehälter (31) zum Bioreaktor (32) und eine Rücklaufschlammleitung (34) für die Rückführung von Klärschlamm aus dem Bioreaktor (32) in den Vorklärbehälter (31) vorhanden sind.

10. Kleinkläranlage nach Anspruch 9, dadurch gekennzeichnet, daß die Zulaufleitung von einem im Vorklärbehälter angeordneten Tauchrohr ausgeht, welches den Überlauf von Schwimmschlamm in den Bioreaktor weitgehend verhindert.

11. Kleinkläranlage nach Anspruch 9 oder 10, dadurch gekennzeichnet, daß mindestens eines der folgenden Elemente angeordnet ist:
• eine Belüftungseinrichtung (36) mit einer Druckluftzuführung (37), über die Luft in den unteren Bereich des Bioreaktors eingeleitet wird;
• eine Rücklaufschlammpumpe (35), die Klärschlamm im unteren Bereich des Bioreaktors absaugt und über die Rücklaufschlammleitung (34) in den Vorklärbehälter (31) zurückführt;
• eine Klarwasserpumpe (38) mit einem nahe der Abwasseroberfläche im Bioreaktor (32) schwimmendem Entnahmepunkt (39), die geklärtes Wasser aus dem Bioreaktor abpumpt.

12. Kleinkläranlage nach Anspruch 11, dadurch gekennzeichnet, daß ein die Druckluft bereitstellendes Gebläse und eine Steuereinheit, welche zumindest die Belüftungseinrichtung (36), die Rücklaufschlammpumpe (35) und die Klarwasserpumpe (38) steuert, in einem dritten Mehrzweckschacht angeordnet sind, der weiterhin ein durch eine Anschlußfläche (9) geführtes Luftansaugrohr besitzt.

13. Abwasserbehandlungsverfahren zur Ausführung in einer Kleinkläranlage, wobei die nachfolgenden Schritte zyklisch ablaufen:
• Einleitung des Abwassers in einen ersten Behälter, wobei sich im Abwasser enthaltene feste Bestandteile als Primärschlamm am Boden absetzen (50);
• Zufuhr des vorgeklärten Abwassers in einen zweiten Behälter;
• Durchführung einer Stoffwechselphase (51), in der die Belüftung des im zweiten Behälters enthaltenen Abwassers durch Eintrag von Luft bzw. Sauerstoff erfolgt, um Stoffwechselvorgänge von vorhandenen Mikroorganismen zur biologischen Behandlung des Abwassers zu begünstigen;
• Durchführung einer Ruhephase (53) im zweiten Behälter, in welcher keine Belüftung und im wesentlichen keine Zufuhr weiteren Abwassers aus dem ersten Behälter erfolgt, wobei sich Stoffwechselprodukte und ggf. weitere feste Bestandteile als Sekundärschlamm am Boden absetzen;
• Abpumpen des Klarwassers (54) und bei Bedarf von Teilen des Sekundärschlamms aus dem zweiten Behälter vor der Zufuhr von größeren Mengen neuen Abwassers.

14. Abwasserbehandlungsverfahren nach Anspruch 13, dadurch gekennzeichnet, daß der Sauerstoffeintrag in der Stoffwechselphase intermittierend erfolgt, und daß in der Stoffwechselphase zusätzlich eine aktive Durchmischung (52) des vorgeklärten Abwassers im zweiten Behälter erfolgt.

15. Abwasserbehandlungsverfahren nach Anspruch 13 oder 14, dadurch gekennzeichnet, daß nach Durchführung mehrerer Zyklen zumindest ein Teil des Sekundärschlamms in den ersten Behälter zurückgepumpt wird, und daß die Stoffwechselphase im wesentlichen am Tag und die Ruhephase im wesentlichen in der Nacht ablaufen.

16. Abwasserbehandlungsverfahren nach einem der Ansprüche 13 bis 15, dadurch gekennzeichnet, daß es in einer Kleinkläranlage gemäß einem der Ansprüche 9 bis 12 ausgeführt wird.
